# EUROPÄISCHE PATENTSCHRIFT

(11) **EP 2 840 705 B1**
(45) Veröffentlichungstag und Bekanntmachung des Hinweises auf die Patenterteilung: **25.10.2017**
(21) Anmeldenummer: 14178690.5
(22) Anmeldetag: 28.07.2014
(51) Int. Cl.: H02P 25/14, B25B 21/02, B25B 23/147

(54) **Verfahren zum Steuern eines Elektrowerkzeuges mit einem elektronisch kommutierten Elektromotor**
Method for controlling an electric tool with an electronically commutated electric motor
Procédé de commande d'un outil électrique avec un moteur électrique commuté électroniquement

(30) Priorität: 12.08.2013 DE 102013108721
(43) Veröffentlichungstag der Anmeldung: 25.02.2015
(73) Patentinhaber: C. & E. Fein GmbH, 73529 Schwäbisch Gmünd-Bargau (DE)
(72) Erfinder: Kaufmann, Michael, 73479 Ellwangen (DE); Woecht, Norbert, 73560 Böbingen an der Rems (DE); Mayer, Bernd, 73479 Ellwangen (DE)
(74) Vertreter: Witte, Weller & Partner Patentanwälte mbB

(56) Entgegenhaltungen:
- EP-A1- 1 670 134
- EP-A2- 2 527 091
- DE-A1- 4 128 427
- DE-A1- 10 228 129
- DE-A1- 19 501 430
- DE-A1- 19 700 479
- US-B1- 6 479 958

## Beschreibung

Die vorliegende Erfindung ist allgemein für Elektrowerkzeuge geeignet, jedoch insbesondere für Schrauber und Bohrer, bei denen mit stark wechselnden Drehmomenten zu rechnen ist. Insbesondere eignet sich die Erfindung, um bei Schraubern im Falle einer festsitzenden Verschraubung zu Beginn ein höheres Drehmoment aufzubringen oder um während des Betriebes ein erhöhtes Drehmoment aufzubringen.

Die Erfindung betrifft ein Verfahren zum Steuern eines Elektrowerkzeuges mit einem elektronisch kommutierten Elektromotor, bei dem der Elektromotor mit Hilfe eines pulsweitenmodulierten Signals gesteuert wird, dessen Tastverhältnis zur Drehzahlsteuerung variierbar ist.

Die Erfindung betrifft ferner ein Elektrowerkzeug mit einem elektronisch kommutierten Elektromotor, mit einer Steuerelektronik zur Ansteuerung des Elektromotors mittels eines pulsweitenmodulierten Signals, dessen Tastverhältnis zur Drehzahlsteuerung variierbar ist, und mit einem Betriebsschalter zum Aktivieren des Elektromotors und zur Drehzahlsteuerung.

Ein derartiges Verfahren zum Steuern eines Elektrowerkzeuges und ein derartiges Elektrowerkzeug sind aus der WO 01/56144 A1 bekannt. Hierin wird eine Steuerelektronik für ein Elektrohandwerkzeug für den Schraub- und Bohrbetrieb vorgeschlagen, die einen Pulsweitenmodulator beinhaltet. Der Pulsweitenmodulator lässt sich zwischen einem Schraubbetrieb und einem Schlagbohrbetrieb umschalten. Im Schraubbetrieb lässt sich das Puls-Pausenverhältnis proportional zur Stellung eines Betriebsschalters oder Gasgebeschalters verändern, um die Drehzahl an die Stellung des Betriebsschalters anzupassen. Ferner lassen sich für einen Schlagbohrbetrieb periodisch Impulsfolgen ausblenden, um eine schlagartige Bewegung des Werkzeuges zu ermöglichen. Bei stärkerem Durchdrücken des Betriebsschalters verkleinern sich die Ausschnitte der pulsweitenmodulierten Gleichspannung in einzelnen Bereichsabschnitten. Ab einer bestimmten Verkleinerung der Ausschnitte der pulsweitenmodulierten Gleichspannung ist die Ausblendung von Gleichspannung in den Bereichsabschnitten aufgehoben, so dass sich ein kontinuierlicher Betrieb ergibt.

Eine derartig variable pulsweitenmodulierte Ansteuerung eines Gleichstrommotors ist grundsätzlich möglich, um im Schlagbohrbetrieb unterschiedliche Impulsstärken zu erzeugen.

Eine Anpassung der Ansteuerung an unterschiedlich geartete Schraubfälle oder Schraubbedingungen ist hierbei jedoch nicht vorgesehen.

Ähnliche pulsweitenmodulierte Ansteuerungen für Gleichstrommotoren sind aus der EP 0 723 333 B2 und der DE 10 2007 025 985 B3 bekannt.

Hierin sind verschiedene Anordnungen für Umschaltungen von einer Betriebsart mit variablem, stetigen Drehverhalten für den Schraubbetrieb auf eine Betriebsart mit intervallartig ruckenden Drehverfahren für einen Schlagbetrieb bekannt, wobei in der intervallartig ruckenden Betriebsart die Versorgungsspannung des Elektromotors in sich periodisch wiederholende Intervalle aufgeteilt wird, in denen sich bestimmte Veränderungen der Versorgungsspannung periodisch wiederholen.

Aus der DE 41 28 427 A1 ist ferner ein kraftgetriebenes Werkzeug mit einer mehrstufigen Festzieh-Drehmoment-Steuerung bekannt, bei welchem der Motor in einer ersten Stufe zunächst mit einer hohen Drehzahl zum Anziehen einer Schraube angetrieben wird, bis ein Zustand kurz vor dem Aufsitzen erreicht wird. Dann wird der Motor angehalten und mit niedriger Drehzahl erneut gestartet, um die Schraube bis zum Aufsitzen festzuziehen. In einer dritten Stufe wird der Motor stromgeregelt betrieben, bis ein bestimmtes Festzieh-Moment erreicht ist.

Aus der EP 1 670 134 A1 sind ferner ein Verfahren und eine Einrichtung zum Steuern eines Motors bekannt, mit einer Detektionseinheit, mit der ein Blockieren eines Motors mittels Erfassens eines Detektionssignals detektierbar ist, und mit einer Antriebseinheit zum Antreiben des Motors, die mit der Detektionseinheit gekoppelt ist und derart eingerichtet ist, dass im Falle eines detektierten Blockierens des Motors der Motor mit einem gepulsten Antriebssignal angetrieben wird.

Aus der US 6 479 958 B1 ist ferner ein Elektrowerkzeug mit einem Elektromotor gemäß dem Oberbegriff von Anspruch 8 bekannt. Hierbei wird nach dem Einschalten des Elektrowerkzeugs zunächst geprüft, ob der Motor festsitzt. In diesem Fall wird der Motor in einen Impulsbetrieb umgeschaltet. Sobald der Motor freigekommen ist, wird der Motor in einen Normalbetrieb zurückgeschaltet.

Ein derartiges Elektrowerkzeug bzw. ein derartiges Verfahren erlaubt es zwar, ein festsitzendes Elektrowerkzeug zu lösen, ohne dass eine Überlastung eintritt, allerdings ist dies nicht für den Fall eines Schraubers anwendbar, bei dem eine Verschraubung möglichst präzise angezogen werden soll.

Vor diesem Hintergrund liegt der Erfindung die Aufgabe zugrunde, ein Verfahren zum Steuern eines Elektrowerkzeuges mit einem elektronisch kommutierten Elektromotor sowie ein Elektrowerkzeug mit einem elektronisch kommutierten Elektromotor zu schaffen, womit in Abhängigkeit von der Art der Belastung automatisch eine erhöhte Leistung auf die Antriebswelle übertragen wird, um festsitzende oder schwergängige Werkzeuge mit erhöhtem Drehmoment zu beaufschlagen. Vorzugsweise soll ferner während eines Bearbeitungsvorgangs, z.B. eines Bohrvorgangs, einem plötzlichen Drehmomentanstieg, etwa durch einen Widerstand im Bohrloch, automatisch durch eine erhöhte Ausgangsleistung des Elektrowerkzeugs entgegengewirkt werden können.

Für den Fall eines Schraubers sollen beispielsweise festsitzende oder schwergängige Schrauben gelöst bzw. weitergedreht werden können. Dabei soll ferner vermieden werden, dass eine Verschraubung mit zu hohem Drehmoment angezogen wird.

Diese Aufgabe wird erfindungsgemäß durch ein Verfahren zum Steuern eines Elektrowerkzeuges mit einem elektronisch kommutierten Elektromotor gemäß Anspruch 1 gelöst.

Ferner wird die Aufgabe der Erfindung durch ein Elektrowerkzeug mit einem elektronisch kommutierten Elektromotor gemäß Anspruch 8 gelöst. Die Aufgabe der Erfindung wird auf diese Weise gelöst.

Erfindungsgemäß wird beim Starten des Elektromotors zunächst mit einem reduzierten Tastverhältnis von weniger als 100 % gearbeitet, das dann, wenn sich der Elektromotor über eine bestimmte Zeitspanne nicht bewegt hat, erhöht wird. Erfindungsgemäß wird das Tastverhältnis also in Abhängigkeit davon, ob sich der Elektromotor über eine bestimmte Impulsdauer nicht bewegt hat, erhöht. Mit einer derartigen Betriebsweise erfolgt eine Anpassung des Tastverhältnisses in Abhängigkeit von der Bewegung des Elektromotors unabhängig von der Stellung des Betriebsschalters beim Start des Elektrowerkzeuges.

Wenn im Zuge dieser Anmeldung von Impulsen bzw. Impulsdauern die Rede ist, so versteht sich dies nicht unbedingt als ein Einzelimpuls im Sinne eines einzigen Anstiegs bzw. Abfalls, sondern es handelt sich im Zusammenhang mit einer Pulsweitenmodulation in der Regel um eine bestimmte Zeitdauer (Impulsdauer), innerhalb derer die PWM-Steuerung eine Folge von Einzelimpulsen (in der Regel Rechteckimpulse) abgibt, d.h. dass die elektronische Kommutierung des Elektromotors in dieser Zeit einen größeren Drehwinkel, z.B. einen Drehwinkel von wenigen Grad oder gar 360° oder mehr, zurücklegen kann. Sobald sich der Elektromotor über eine bestimmte Zeitdauer gedreht hat, wird das Tastverhältnis gemäß der Stellung eines Betriebsschalters angepasst, um die Drehzahl gemäß der Vorgabe des Betriebsschalters einzustellen.

Auf diese Weise wird vermieden, dass der Elektromotor unabhängig von der Stellung des Betriebsschalters zunächst mit einer großen Drehzahl los dreht, was bei einem geringen Einschraubwiderstand zu einem zu festen Anziehen der Verschraubung führen würde. Vielmehr wird durch den langsamen Beginn und die spätere Umschaltung gemäß der Stellung des Betriebsschalters zu Beginn ein Drehzahlüberschuss vermieden und dennoch eine möglichst schnelle Anziehung der Verschraubung gewährleistet.

In bevorzugter Weiterbildung der Erfindung wird der Elektromotor dann, wenn er sich während eines Betriebs mit erhöhtem Tastverhältnis nicht gedreht hat, für eine nachfolgende Impulsdauer mit einem weiter erhöhten Tastverhältnis betrieben.

Es versteht sich, dass eine derartige Erhöhung periodisch durchgeführt werden kann, bis das maximale Tastverhältnis (100 %) erreicht ist.

Sollte sich der Elektromotor auch mit maximalem Tastverhältnis nicht drehen, so wird gemäß einer weiteren bevorzugten Ausgestaltung der Erfindung der Elektromotor zunächst für eine bestimmte Impulsdauer um einen bestimmten Winkel in Gegenrichtung angetrieben und für eine nachfolgende Impulsdauer in Vorwärtsrichtung betrieben.

Bei einer derartigen Ausführung wird die Trägheit bzw. das Spiel des Elektromotors ausgenutzt, da zwischen beiden Drehrichtungen immer ein gewisses Spiel besteht und somit nach vorherigem Zurückdrehen insgesamt ein größeres Drehmoment erreicht wird, bevor die Abbremsung des Elektromotors durch den vorherrschenden Widerstand, z.B. einer Schraube, erfolgt. Noch stärker ausgeprägt ist dieser Effekt, wenn man berücksichtigt, dass in der Regel bei Elektrowerkzeugen der Elektromotor mit einem Getriebe gekoppelt ist, wodurch insgesamt das Spiel und die Trägheit des Antriebsstrangs vergrößert wird.

In weiter bevorzugter Ausgestaltung der Erfindung wird vor dem Betrieb des Elektromotors mit geändertem Tastverhältnis und/oder geänderter Drehrichtung eine bestimmte Wartezeit eingefügt.

Diese Wartezeit, die für den Anwender unmerklich kurz ist, z.B. etwa 10 bis 60 Millisekunden, vorzugsweise etwa 30 Millisekunden beträgt, dient der Reinitialisierung des Elektromotors und dem Abbau von eventuell im System vorhandenen mechanischen Schwingungen. Hierdurch wird die Gesamtperformance verbessert.

Gemäß einer weiteren Ausgestaltung der Erfindung wird der Elektromotor ausgeschaltet, wenn er sich während eines Betriebs mit einem Tastverhältnis von 100 % über eine bestimmte Impulsdauer, ggf. nach vorheriger Rückdrehung in entgegengesetzter Richtung, nicht gedreht hat.

In einem solchen Fall ist die Leistung des Elektromotors offensichtlich nicht ausreichend, selbst nach Erhöhung des Tastverhältnisses auf bis zu 100 % und selbst nach vorheriger Drehung des Antriebsstrangs in entgegengesetzter Richtung, um das Werkzeug in Gang zu setzen, weshalb der Elektromotor zur Vermeidung von Überlastung dann ausgeschaltet wird.

Gemäß einer weiteren Ausgestaltung der Erfindung wird das Tastverhältnis nur dann erhöht, wenn der Elektromotor seit dem Start einen bestimmten Drehwinkel, vorzugsweise etwa 700° bis 1300°, besonders bevorzugt etwa 1000° (etwa 3 Umdrehungen), nicht überschritten hat.

Eine solche Ausgestaltung ist insbesondere dann vorteilhaft, wenn das Elektrowerkzeug als Schrauber eingesetzt wird. Im Falle eines sog. weichen Schraubfalls wird eine Schraube kontinuierlich angezogen und das Anzugsmoment steigt am Ende des Schraubvorgangs allmählich an. Im Falle eines sog. harten Schraubfalls steigt dagegen das Anzugsmoment am Ende schlagartig an.

Würde das Tastverhältnis auch dann erhöht, wenn der Elektromotor seit dem Starten bereits einen größeren Drehwinkel zurückgelegt hat, so könnte dies zu einer Verwirrung des Benutzers führen, da, ohne dass er selbst eine Veränderung vorgenommen hat, z.B. durch stärkeres Durchdrücken des Betriebsschalters, plötzlich eine größere Leistung vom Elektromotor auf die Schraubstelle übertragen würde.

Erfolgt dagegen die Erhöhung des Tastverhältnisses zu Anfang des Schraubvorgangs, etwa um eine festsitzende Verschraubung zu lösen, so wird die Erhöhung des Drehmomentes vom Benutzer erwartet.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: den grundsätzlichen Aufbau eines erfindungsgemäßen Elektrowerkzeuges;
- Fig. 2: den grundsätzlichen Aufbau eines elektrisch kommutierten Elektromotors (EC-Motors);
- Fig. 3: ein erstes Flussdiagramm zur Erläuterung des Anlauffahrens mit einer nur einmaligen Erhöhung des Tastverhältnisses und anschließendem Anhalten ("Einzelimpuls"), sofern sich der Elektromotor nach Erhöhung des Tastverhältnisses nicht bewegt hat;
- Fig. 4: einen typischen Anlaufvorgang des erfindungsgemäßen Elektrowerkzeuges gemäß Fig. 3, bei dem zunächst mit einem geringen Tastverhältnis (Duty-Cycle, DC) begonnen wird und nach Einführung einer Wartezeit mit einem erhöhten Tastverhältnis fortgesetzt wird;
- Fig. 5: den zugehörigen Drehzahlverlauf zum Tastverhältnis gemäß Fig. 4;
- Fig. 6: ein Flussdiagramm für eine geänderte Ansteuerung, die einerseits eine periodische Erhöhung des Tastverhältnisses ermöglicht, sofern der Elektromotor bei einmaliger Erhöhung des Tastverhältnisses nicht anläuft, wobei andererseits auch während des laufenden Betriebs eine Anpassung des Tastverhältnisses ermöglicht ist, sofern etwa der Elektromotor infolge eines plötzlichen Drehmomentanstiegs plötzlich stehenbleiben sollte.

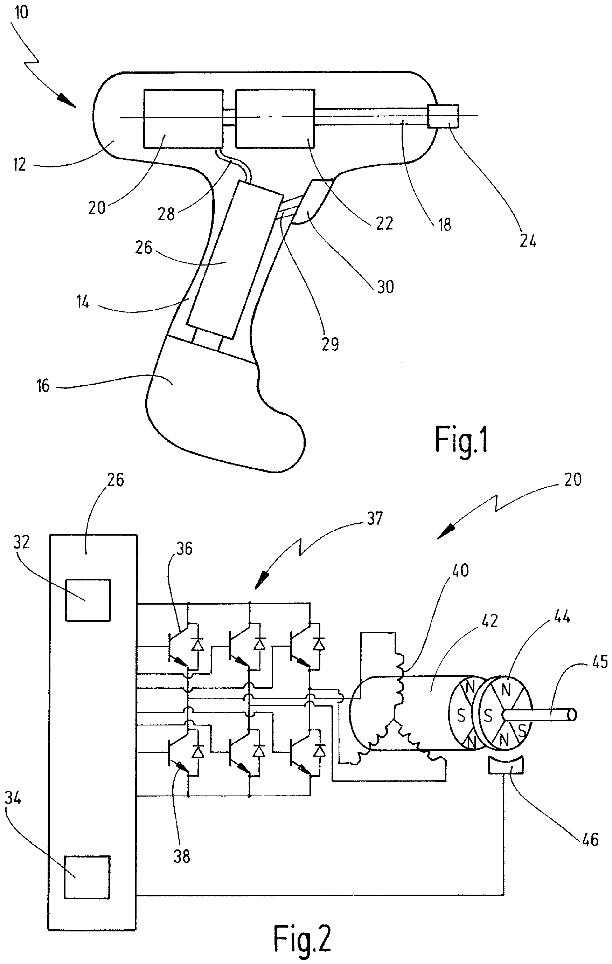

Eine grundsätzliche Ausführung eines erfindungsgemäßen Elektrowerkzeugs ist in Fig. 1 schematisch dargestellt und insbesondere mit der Ziffer 10 bezeichnet. Bei dem Elektrowerkzeug 10 handelt es sich um einen Schrauber mit einem Gehäuse 12, an dem ein Pistolenhandgriff 14 aufgenommen ist, an dessen unterem Ende ein Akkumulator 16 abnehmbar befestigt ist. Das Elektrowerkzeug 10 weist im oberen Teil des Gehäuses einen Elektromotor 20 in Form eines EC-Motors auf, der ein Getriebe 22 antreibt, von dem schließlich eine Werkzeugspindel 18 angetrieben wird, an der eine Werkzeugaufnahme 24, etwa zur Aufnahme eines Bits, vorgesehen ist. Im Pistolenhandgriff 14 ist schematisch eine Steuerelektronik 26 angedeutet, die über Anschlussleitungen 28 mit dem Elektromotor 20 in Verbindung steht und über Anschlussleitungen 29 mit einem Betriebsschalter 30 (auch Gasgebeschalter genannt) in Form einer Taste, mit der der Elektromotor 20 eingeschaltet werden kann und je nach Niederdrücken die Drehzahl gesteuert werden kann.

In Fig. 2 ist der grundsätzliche Aufbau des Elektromotors 20 dargestellt.

Der Elektromotor 20 umfasst den Motor im engeren Sinne mit einem Permanent-Magnetrotor 42 und einem Stator mit drei Statorwicklungen 40, die im Dreieck geschaltet sind und mit einer Leistungselektronik 37 verbunden sind, die zur Ansteuerung des Elektromotors dient. Die Leistungselektronik 37 umfasst drei Transistorbrücken aus Feldeffekttransistoren mit zugeordneten Dioden. Beispielhaft sind die elektronischen Schalter 36 für das Schalten der positiven Versorgungsspannung und die elektronischen Schalter für das Schalten der negativen Versorgungsspannung mit 38 bezeichnet. Die Steuerelektronik 26 umfasst ferner einen Mikrocontroller 32, der mit einem Pulsweitengenerator 34 gekoppelt ist, über den die Leistungselektronik 37 angesteuert wird. Dem Permanent-Magnetrotor 42 ist ein Steuermagnet 44 zugeordnet, der auf der Motorwelle 45 sitzt. Dem Steuermagnet 44 ist eine Rotorlagenerfassung 46 zugeordnet, die vorzugsweise mehrere Hall-Generatoren umfasst.

Bei dem hier dargestellten EC-Motor handelt es sich um einen bürstenlosen Gleichstrommotor (BLDC-Motor), wobei es sich um eine spezielle Bauform einer Synchronmaschine handelt. Das heißt, dass sich das durch den Stator erzeugte magnetische Feld mit der gleichen Drehzahl dreht, wie das durch den Rotor erzeugte magnetische Feld. Der BLDC-Motor benötigt keine Bürsten für die Kommutierung der Ströme; diese wird elektronisch erzeugt.

Um die Kommutierung im richtigen Moment, bezogen auf die Position des Rotors, durchzuführen, ist es essenziell, dessen Lage zu kennen. Wäre die Lage nicht bekannt, so wäre die Verlustleistung, hervorgerufen durch falsche Kommutierungszeitpunkte der Ströme, sehr hoch bzw. der Rotor würde sich nicht oder nur undefiniert drehen. Die Rotorlagenerfassung 46 erfolgt im vorliegenden Fall durch drei Hall-Schalter, welche auf einer Platine, fest verbunden mit dem Stator, montiert sind. Sie sind versetzt zueinander angeordnet und generieren pro elektrischer Umdrehung des Magnetfeldes sechs Zustände. Im Falle des betreffenden Elektromotors 20 wären dies achtzehn Zustände pro mechanischer Umdrehung. Alternativ zu der hier nur schematisch mit 46 angedeuteten Erfassung durch die Hall-Schalter ist auch eine sensorlose Kommutierung denkbar. Hierbei wird die Spannung der floatenden, nicht bestromten Phase überwacht. Wird ein Nulldurchgang dieser Spannung in positiver oder negativer Richtung detektiert, so wird anhand dieser Information die Kommutierung ausgelöst.

Durch die PWM-Ansteuerung der einzelnen Phasen hat ein kleines Tastverhältnis (Duty-Cycle DC) eine geringe Drehzahl zur Folge. Umgekehrt hat ein großes Tastverhältnis eine hohe Drehzahl zur Folge. Da in einem BLDC-Motor das Drehmoment weitestgehend proportional zum Strom ist, erzeugt ein kleiner Strom ein geringes Drehmoment und ein großer Strom ein großes Drehmoment.

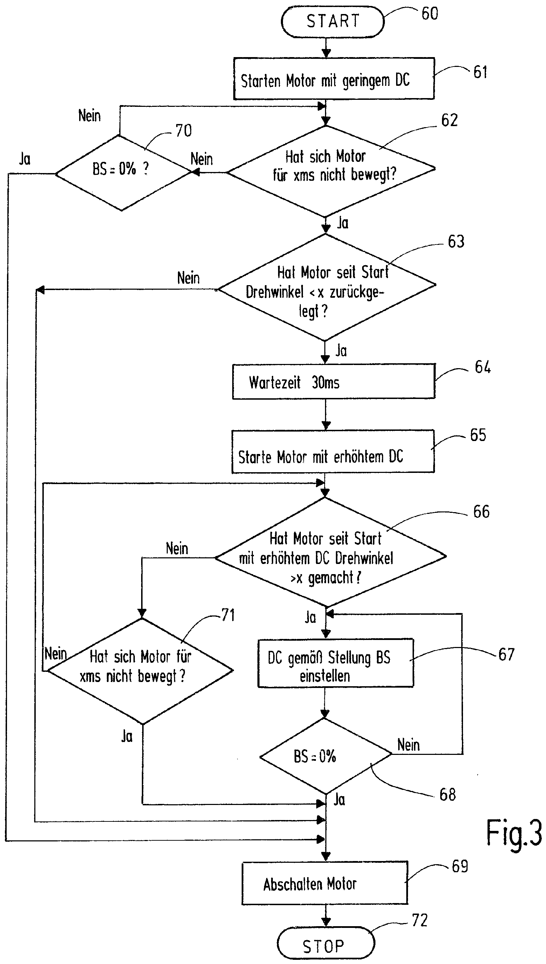

Ein grundsätzlicher Ablauf einer ersten Variante einer erfindungsgemäßen Betriebsweise des Elektromotors wird nachfolgend anhand von Fig. 3 näher erläutert. Es versteht sich, dass neben den gezeigten Abläufen noch weitere Abläufe teils parallel stattfinden, um den Elektromotor anzusteuern, zu überwachen oder zu regeln. Das hier in Fig. 3 gezeigte Programm betrifft den Anlauf des Elektromotors und die weitere Steuerung der Drehzahl gemäß der Stellung des Betriebsschalters.

Das Programm beginnt beim mit 60 bezeichneten Start. Wird eine Betätigung des Betriebsschalters (abgekürzt BS) registriert, so wird der Elektromotor zunächst mit einem geringen Tastverhältnis (abgekürzt DC) gestartet, im konkreten Fall mit einem minimalen DC von 4 %. Es wird nun mittels der Rotorlagenerfassung 46 kontinuierlich geprüft, ob sich der Elektromotor dreht (Abfrage 62). Hat sich der Elektromotor für eine Zeitdauer von x Millisekunden (vorzugsweise 10 bis 100 Millisekunden) bewegt (Ausgang der Abfrage mit "Nein"), so wird zunächst bei der Abfrage 70 überprüft, ob der Benutzer den Elektromotor ausschalten will (BS = 0 %). Ist dies nicht der Fall, so geht die Schleife zurück zur Abfrage 62. Möchte der Benutzer den Elektromotor ausschalten, so geht es zur Anweisung 69 (Abschalten Motor) und anschließend zum Ende des Programms, das mit 72 bezeichnet ist. Ergibt die Abfrage 62, dass sich der Elektromotor nicht bewegt hat, so wird zunächst bei der Abfrage 63 geprüft, ob der Elektromotor seit dem Start einen Drehwinkel < x zurückgelegt hat (vorzugsweise etwa 1000°).

Ist dies der Fall, hat sich der Elektromotor also praktisch seit dem Start kaum bewegt, so wird zunächst eine für den Benutzer unmerkliche Wartezeit von vorzugsweise 50 Millisekunden oder weniger eingefügt. Diese Wartezeit dient dazu, eine Reinitialisierung des Elektromotors durchzuführen und eventuell im System vorhandene mechanische Schwingungen abzubauen (Anweisung 64). Nach dem Ablauf der Wartezeit wird der Elektromotor dann gemäß der Anweisung 65 mit einem erhöhten Tastverhältnis (im konkreten Fall DC = 30 %) gestartet, was ein erhöhtes Drehmoment zur Folge hat. Mit Hilfe dieses erhöhten Drehmoments kann etwa ein Losbrechelement einer festsitzenden Schraube (Haftreibung) überwunden werden und diese weiter angezogen bzw. gelöst werden. Das Prinzip ist hierbei ähnlich wie bei einem Schlag- bzw. Impulsschrauber. Danach wird der Elektromotor weiter überwacht, um einen erneuten Stillstand detektieren zu können. In der Abfrage 66 wird überprüft, ob der Elektromotor seit dem Start mit erhöhtem Tastverhältnis DC einen Drehwinkel > x (vorzugsweise etwa 600° oder etwa 2 Umdrehungen) zurückgelegt hat. Ist dies der Fall, so wird in der Anweisung 67 das Tastverhältnis nunmehr gemäß der Stellung des Betriebsschalters eingestellt, d.h. entsprechend erhöht oder erniedrigt.

In der nachfolgenden Abfrage 68 wird wieder geprüft, ob der Benutzer den Elektromotor ausschalten will (BS = 0 %). Ist dies der Fall, so wird der Elektromotor bei der Anweisung 69 abgeschaltet und das Programm endet bei 72. Will der Benutzer den Elektromotor bei der Abfrage 68 nicht abschalten, so geht die Schleife zurück zur Einstellung des Tastverhältnisses gemäß der Vorgabe des Betriebsschalters bei 67.

Ergibt die Abfrage 62, dass sich der Elektromotor seit dem Starten für eine bestimmte Zeitdauer von x Millisekunden (vorzugsweise 10 bis 100 Millisekunden) nicht bewegt hat und ergibt die nachfolgende Abfrage 63, dass der Elektromotor seit dem Start einen größeren Drehwinkel als x (vorzugsweise etwa 1000°) zurückgelegt hat, so wird auf die nachfolgende Erhöhung des Tastverhältnisses verzichtet, um den Benutzer nicht zu verwirren. In diesem Fall führt die Abzweigung direkt zur Abschaltung des Elektromotors bei 69. Auf die Abfrage 63 könnte bei einer Variante des Verfahrens auch verzichtet werden.

Ergibt nach dem Starten des Elektromotors mit erhöhtem Tastverhältnis bei 65 die nachfolgende Abfrage 66, dass der Elektromotor seit dem Start mit erhöhtem Tastverhältnis keinen Drehwinkel > x (vorzugsweise etwa 600° zurückgelegt hat, so wird in einer nachfolgenden Abfrage 71 geprüft, ob sich der Elektromotor für eine bestimmte Zeitdauer von x Millisekunden (vorzugsweise etwa 10 bis 100 Millisekunden) nicht bewegt hat. Ist dies der Fall, so führt dies zum Abschalten des Elektromotors bei 69. Hat sich der Elektromotor jedoch in der Zeitspanne von x Millisekunden (vorzugsweise etwa 10 bis 100 Millisekunden) bewegt (Ausgang "Nein"), so führt die Verzweigung zurück zum Eingang der Verzweigung 66 nach dem Starten des Elektromotors mit erhöhtem Tastverhältnis.

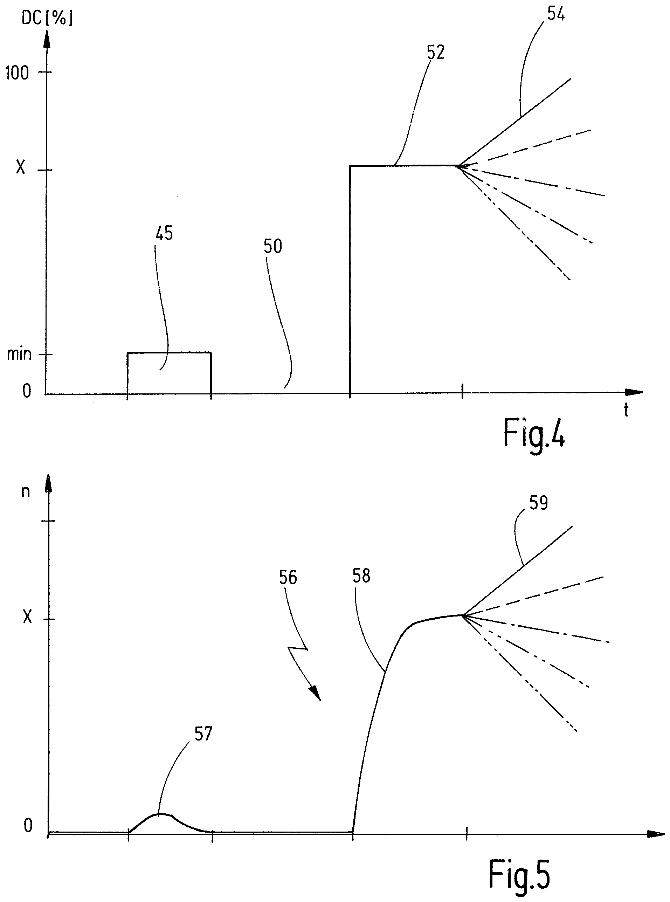

Das obige Programm gemäß Fig. 4 beschreibt den Ablauf mit einem einmaligen Impuls beim Starten des Elektromotors. Entweder läuft der Elektromotor an, dann wird letztendlich das Tastverhältnis gemäß der Vorgabe des Betriebsschalters eingestellt. Läuft der Elektromotor jedoch nicht an, so wird dann, wenn sich der Elektromotor noch nicht über einen größeren Drehwinkel bewegt hat, zunächst eine Wartezeit eingefügt und der Elektromotor dann mit erhöhtem Tastverhältnis gestartet. Führt auch dies nicht zum Erfolg, so wird der Elektromotor abgeschaltet und der Benutzer muss diesen erneut starten.

Eine entsprechende Darstellung des Tastverhältnisses und der Drehzahl befindet sich in den Fig. 4 und 5. Fig. 4 zeigt zunächst das Starten des Elektromotors mit geringem Tastverhältnis gemäß dem Impuls 48 mit minimalem Tastverhältnis von 4 %, gefolgt von einer Wartezeit 50 und einem nachfolgenden Impuls 52 mit erhöhtem Tastverhältnis von x, was beispielsweise 30 % sein kann. Ist der Elektromotor dann angelaufen, so ergibt sich eine nachfolgende Einstellung des Tastverhältnisses gemäß der Kurve 54 abhängig von der Stellung des Betriebsschalters (verschiedene Varianten sind beispielhaft dargestellt).

Fig. 5 zeigt den zugeordneten Drehzahlverlauf 56 mit einem kleinen Drehzahlpeak 57 während der ersten Impulsdauer 48, gefolgt von der Drehzahl 0 während der Wartezeit und einen Drehzahlanstieg bei 58, gefolgt von der Drehzahleinstellung bei 59 gemäß der Vorgabe des Betriebsschalters.

Es versteht sich, dass das zuvor anhand von Fig. 3 dargestellte Beispiel lediglich eine Möglichkeit darstellt, die ein erstmaliges Anlaufen des Elektromotors beschreibt.

Insbesondere ist es denkbar, dann, wenn der Elektromotor nach einem Start mit erhöhtem Tastverhältnis nicht anläuft, das Tastverhältnis wiederholt zu erhöhen, bis der Elektromotor entweder angelaufen ist oder ein maximales Tastverhältnis von 100 % erreicht ist.

Des Weiteren ist es möglich, den Antriebsstrang (Elektromotor plus Getriebe) entgegen der Drehrichtung zunächst um einen gewissen Betrag zurückzudrehen, um das Spiel auszunutzen. Beim nachfolgenden Antrieb in Drehrichtung ergibt sich somit ein größerer Weg, der zurückgelegt wird und ein höheres Trägheitsmoment, so dass sich noch ein stärkerer Impuls zum Losbrechen einer Schraube ergibt.

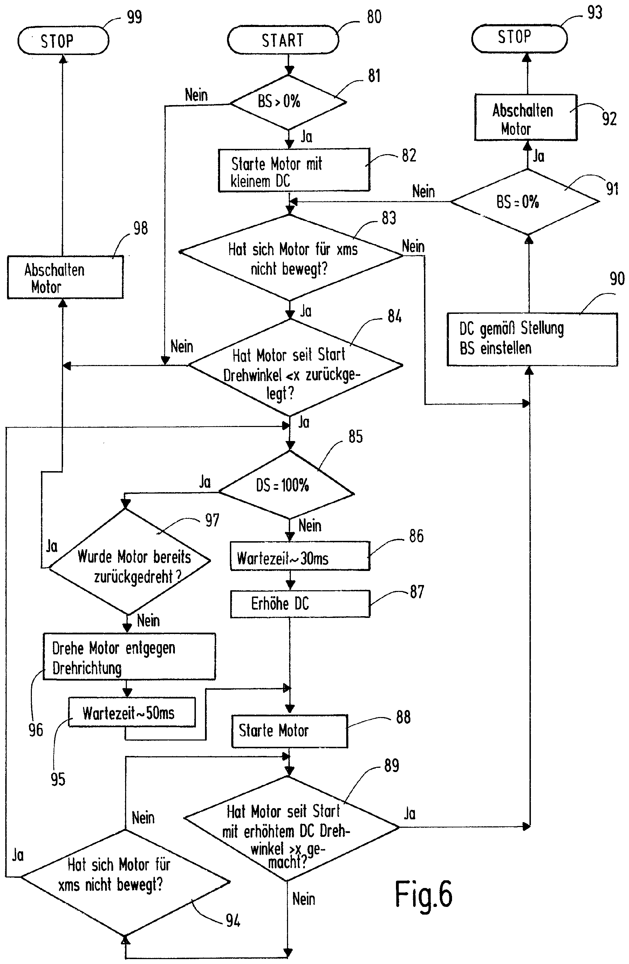

Eine derartige abgewandelte Betriebsweise wird im Folgenden anhand von Fig. 6 beschrieben.

Hierbei wird der Elektromotor zunächst bei 80 gestartet. Anschließend wird bei 81 abgefragt, ob gemäß der Stellung des Betriebsschalters BS ein Anlauf erwünscht ist. Ist dies nicht der Fall, so wird der Elektromotor bei der Anweisung 98 abgeschaltet und das Programm endet bei 99. Soll der Elektromotor anlaufen, so wird der Elektromotor zunächst gemäß der Anweisung 82 mit kleinem Tastverhältnis (DC = 4 %) gestartet.

Anschließend wird bei 83 abgefragt, ob sich der Elektromotor über einen bestimmten Zeitraum von x Millisekunden (vorzugsweise 10 bis 100 Millisekunden) nicht bewegt hat. Hat sich der Elektromotor bewegt (Ausgang "Nein"), so wird das Tastverhältnis gemäß der Stellung des Betriebsschalters eingestellt bei 90. Anschließend erfolgt bei 91 eine Abfrage, ob der Benutzer den Elektromotor ausschalten will (BS = 0 %). Ist dies der Fall, so erfolgt bei 92 ein Abschalten des Elektromotors und ein Stopp des Programms bei 93. Will der Benutzer den Elektromotor bei 91 nicht abschalten, so führt die Schleife zurück zum Eingang der Verzweigung 83.

Es wird also abgefragt, ob sich der Elektromotor über eine bestimmte Zeitdauer von x Millisekunden (vorzugsweise 10 bis 100 Millisekunden) nicht bewegt hat. Ist dies der Fall, so wird zunächst bei der Verzweigung 84 abgefragt, ob der Elektromotor seit dem Start einen Drehwinkel < x (vorzugsweise etwa 1000°) zurückgelegt hat. Ist dies nicht der Fall, d.h. hat sich der Elektromotor bereits seit dem Start mit einem größeren Drehwinkel bewegt, so wird der Elektromotor bei 98 abgeschaltet und das Programm endet bei 99. Diese Abfrage wird verwendet, um eine Überraschung des Benutzers zu vermeiden, wenn sich der Elektromotor bereits mit einem größeren Drehwinkel gedreht hat. Optional kann Abfrage 84 auch entfallen.

Hat sich der Elektromotor nur um einen Drehwinkel von x (vorzugsweise etwa 1000°) bewegt, wird bei der nachfolgenden Abfrage 85 zunächst überprüft, ob das Tastverhältnis schon 100 % beträgt. Ist dies nicht der Fall, so wird bei der nachfolgenden Anweisung 86 zunächst wieder eine Wartezeit von etwa 10 bis 60 Millisekunden (bevorzugt etwa 30 Millisekunden) eingefügt und nachfolgend das Tastverhältnis bei 87 um einen inkrementalen Wert erhöht. Anschließend wird der Elektromotor bei 88 gestartet.

In der nachfolgenden Abfrage 89 wird überprüft, ob sich der Elektromotor seit dem Start mit erhöhtem Tastverhältnis (Anweisung 87) um einen Drehwinkel größer einem bestimmten Drehwinkel x (vorzugsweise etwa 600°) bewegt hat. Ist dies der Fall, so führt der Ausgang der Verzweigung zur Anweisung 90, d.h. zur Einstellung des Tastverhältnisses gemäß der Vorgabe des Betriebsschalters. Es kann sich hierbei um eine Erhöhung oder Erniedrigung des Tastverhältnisses handeln, in Abhängigkeit davon, welches Tastverhältnis zu dieser Zeit eingestellt ist und welche Vorgabe vom Betriebsschalter gemacht wird.

Ergibt die Verzweigung bei 89, dass sich der Elektromotor seit dem Start mit erhöhtem Tastverhältnis nur um einen Drehwinkel < x (etwa 600°) bewegt hat (Ausgang "Nein"), so wird zunächst bei der Abfrage 94 überprüft, ob sich der Elektromotor über einen Zeitraum von x Millisekunden (vorzugsweise 10 bis 100 Millisekunden) nicht bewegt hat. Ist dies der Fall, so führt die Verzweigung zurück zum Eingang der Verzweigung 85, d.h. zur Abfrage, ob das Tastverhältnis bereits 100 % beträgt. Hat sich der Elektromotor bei der Verzweigung 94 jedoch bewegt (Ausgang "Nein"), so führt dies zurück zum Eingang der Verzweigung 89.

Wird bei der Verzweigung 85 festgestellt, dass das Tastverhältnis bereits maximal ist, also 100 % beträgt, so wird bei der Verzweigung 97 zunächst geprüft, ob der Elektromotor bereits entgegen der Drehrichtung zurückgedreht wurde. Ist dies der Fall, so wurden alle Möglichkeiten zur Erhöhung des Drehmoments bzw. zur Impulserhöhung ausgeschöpft, ohne dass dies zum Erfolg geführt hat. Der Ausgang mit "Ja" führt daher zum Abschalten des Elektromotors bei 98 und dem nachfolgenden Programmstopp bei 99.

Ergibt die Verzweigung bei 97 doch, dass der Elektromotor noch nicht entgegen seiner Drehrichtung zurückgedreht wurde, so wird bei der Anweisung 96 der Elektromotor (einschließlich daran angeschlossenem Getriebe) um einen bestimmten Betrag zurückgedreht, dann vorzugsweise bei 95 wieder eine Wartezeit eingefügt und der Elektromotor anschließend erneut bei 88 gestartet.

Optional kann natürlich der Zweig mit der Drehung des Elektromotors entgegen der Drehrichtung entfallen.

Grundsätzlich kann eine Anpassung des Tastverhältnisses DC gemäß der Vorgabe des Betriebsschalters BS (vgl. Anweisung 90 gemäß Fig. 6 oder Anweisung 67 gemäß Fig. 3) auf verschiedene Arten durchgeführt werden. Gibt der Betriebsschalter eine Stellung vor, in der eine geringere Drehzahl eingestellt werden soll, als durch das aktuelle Tastverhältnis erreicht würde, so wird das Tastverhältnis vorzugsweise sofort auf den niedrigeren Wert verringert, um eine Überhöhung der Drehzahl zu verhindern und um dem Nutzer ein möglichst feinfühliges Anziehen der Schraube zu ermöglichen.

Gibt der Betriebsschalter eine Stellung vor, in der die gleiche oder eine höhere Drehzahl eingestellt werden soll, als durch das aktuelle Tastverhältnis erreicht würde, so kann eine Beschleunigung des Elektromotors anhand einer Rampe (allmähliches Beschleunigen) oder ein hartes Aufschalten des durch den Betriebsschalter vorgegebenen Tastverhältnisses erfolgen.

Abhängig von der gewünschten Betriebsweise kann also eine sanfte Erhöhung der Drehzahl oder eine abrupte Erhöhung der Drehzahl erfolgen.

Eine weitere Abwandlung des beschriebenen Verfahrens kann beispielsweise dann genutzt werden, wenn Sichtverschraubungen exakt bündig versenkt werden sollen (beispielsweise eine Holzschraube mit Senkkopf in Holz). Hierbei kann vom Benutzer der Betriebsschalter absichtlich nur so weit durchgedrückt werden, dass es zu einem Stillstand des Elektromotors kommt. Aus der vorherigen Beschreibung gemäß Fig. 3 ist es bekannt, dass nach einem Stillstand des Elektromotors mit einem erhöhten Tastverhältnis erneut gestartet wird. Wird der Betriebsschalter nicht weiter durchgedrückt, so wird nach einer bestimmten Zeit wieder das vom Benutzer vorgegebene Tastverhältnis eingestellt, welches schon zuvor zum Stillstand des Elektromotors geführt hat und dies dann auch wieder tun wird. In der Zwischenzeit hat sich aber der Elektromotor und auch die betreffende Schraube um einen bestimmten Drehwinkel weiterbewegt und ist somit auch ihrer Endlage nähergekommen. Wird der beschriebene Vorgang durch den Benutzer oder ggf. durch einen automatischen Programmablauf wiederholt, so bietet sich hierbei die Möglichkeit, eine Schraube mit Hilfe von Drehmomentimpulsen bündig zu versenken.

## Patentansprüche

1. Verfahren zum Steuern eines Elektrowerkzeuges (10) mit einem elektronisch kommutierten Elektromotor (20), mit den folgenden Schritten:
(a) Erzeugen eines pulsweitenmodulierten Signals, dessen Tastverhältnis zur Drehzahlsteuerung variierbar ist;
(b) Starten des Elektromotors (20) für eine erste Impulsdauer mit einem reduzierten Tastverhältnis von weniger als 100 %, vorzugsweise mit einem minimalen Tastverhältnis;
(c) Erhöhen des Tastverhältnisses für eine nachfolgende Impulsdauer, sofern sich der Elektromotor (20) über eine bestimmte Zeitspanne nicht gedreht hat;
(d) wobei dann, wenn sich der Elektromotor (20) über eine bestimmte Zeitdauer gedreht hat, das Tastverhältnis gemäß der Stellung eines Betriebsschalters (30) angepasst wird, um die Drehzahl gemäß der Vorgabe des Betriebsschalters (30) einzustellen.

2. Verfahren nach Anspruch 1, bei dem die bestimmte Zeitspanne gemäß Schritt (c) 10 bis 100 Millisekunden beträgt.

3. Verfahren nach Anspruch 1 oder 2, bei dem der Elektromotor (20) dann, wenn er sich während eines Betriebs mit erhöhtem Tastverhältnis nicht bewegt hat, für eine nachfolgende Impulsdauer mit einem weiter erhöhten Tastverhältnis betrieben wird.

4. Verfahren nach Anspruch 3, bei dem der Elektromotor (20) eine Vorwärtsrichtung und eine Gegenrichtung aufweist, und wobei der Elektromotor (20) dann, wenn er sich während eines Betriebs mit erhöhtem Tastverhältnis nicht bewegt hat, zunächst für eine bestimmte Impulsdauer um einen bestimmten Winkel in Gegenrichtung angetrieben wird und für eine nachfolgende Impulsdauer in Vorwärtsrichtung betrieben wird.

5. Verfahren nach einem der vorhergehenden Ansprüche, bei dem vor dem Betrieb des Elektromotors (20) mit geändertem Tastverhältnis und/oder geänderter Drehrichtung eine bestimmte Wartezeit eingefügt wird, die vorzugsweise 10 bis 60 Millisekunden, besonders bevorzugt etwa 30 Millisekunden beträgt.

6. Verfahren nach einem der vorhergehenden Ansprüche, bei dem der Elektromotor (20) ausgeschaltet wird, wenn er sich während eines Betriebs mit einem Tastverhältnis von 100 % über eine vorbestimmte Impulsdauer nicht bewegt hat.

7. Verfahren nach einem der vorhergehenden Ansprüche, bei dem das Tastverhältnis nur dann erhöht wird, wenn der Elektromotor (20) seit dem Starten einen bestimmten Drehwinkel, vorzugsweise etwa 700° bis 1300°, besonders bevorzugt etwa 1000° (etwa 3 Umdrehungen), nicht überschritten hat.

8. Elektrowerkzeug mit einem Elektromotor, mit einer Steuerelektronik (26) mit einem Betriebsschalter (30) zum Aktivieren des Elektromotors (20) und zur Drehzahlsteuerung, **dadurch gekennzeichnet, dass** der Elektromotor (20) elektronisch kommutiert ist, dass die Steuerelektronik (26) derart ausgebildet ist, dass der Elektromotor (20) mittels eines pulsweitenmodulierten Signals, dessen Tastverhältnis zur Drehzahlsteuerung variierbar ist, angesteuert wird, wobei beim Starten für eine erste Impulsdauer mit einem reduzierten Tastverhältnis von weniger als 100 %, vorzugsweise mit einem minimalem Tastverhältnis, begonnen wird, dass das Tastverhältnis für eine nachfolgende Impulsdauer unabhängig von der Stellung des Betriebsschalters (30) erhöht wird, sofern sich der Elektromotor (20) über eine bestimmte Zeitdauer nicht gedreht hat, und dass dann, wenn sich der Elektromotor (20) über eine bestimmte Zeitdauer gedreht hat, das Tastverhältnis gemäß der Stellung des Betriebsschalters (30) angepasst wird, um die Drehzahl gemäß der Vorgabe des Betriebsschalters (30) einzustellen.

9. Elektrowerkzeug nach Anspruch 8, **dadurch gekennzeichnet, dass** die Steuerelektronik (26) derart ausgebildet ist, dass der Elektromotor (20) dann, wenn er sich während eines Betriebs mit erhöhtem Tastverhältnis nicht bewegt hat, für eine nachfolgende Impulsdauer mit einem weiter erhöhten Tastverhältnis betrieben wird.

10. Elektrowerkzeug nach Anspruch 9, **dadurch gekennzeichnet, dass** der Elektromotor (20) eine Vorwärtsrichtung und eine Gegenrichtung hat, und dass die Steuerelektronik (26) derart ausgebildet ist, dass der Elektromotor (20) dann, wenn er sich während eines Betriebs mit erhöhtem Tastverhältnis nicht bewegt hat, zunächst für eine bestimmte Impulsdauer um einen bestimmten Winkel in Gegenrichtung angetrieben wird und für eine nachfolgende Impulsdauer in Vorwärtsrichtung betrieben wird.

11. Elektrowerkzeug nach Anspruch 8, 9 oder 10, **dadurch gekennzeichnet, dass** die Steuerelektronik (26) derart ausgebildet ist, dass vor dem Betrieb des Elektromotors (20) mit geändertem Tastverhältnis und/oder geänderter Drehrichtung eine bestimmte Wartezeit, die vorzugsweise 10 bis 60 Millisekunden, besonders bevorzugt etwa 30 Millisekunden beträgt, eingefügt wird.

12. Elektrowerkzeug nach einem der Ansprüche 8 bis 11, **dadurch gekennzeichnet, dass** die Steuerelektronik (26) derart ausgebildet ist, dass der Elektromotor (20) ausgeschaltet wird, wenn er sich während eines Betriebs mit einem Tastverhältnis von 100 % über eine vorbestimmte Impulsdauer nicht bewegt hat.

13. Elektrowerkzeug nach einem der Ansprüche 8 bis 12, **dadurch gekennzeichnet, dass** die Steuerelektronik (26) derart ausgebildet ist, dass dann, wenn sich der Elektromotor (20) über eine bestimmte Zeitdauer bewegt hat, das Tastverhältnis gemäß der Stellung des Betriebsschalters (30) angepasst wird, um die Drehzahl gemäß der Stellung des Betriebsschalters (30) anzupassen.

14. Elektrowerkzeug nach einem der Ansprüche 8 bis 13, **dadurch gekennzeichnet, dass** die Steuerelektronik (26) derart ausgebildet ist, dass das Tastverhältnis nur dann erhöht wird, wenn der Elektromotor (20) seit dem Starten einen bestimmten Drehwinkel, vorzugsweise etwa 700° bis 1300°, besonders bevorzugt etwa 1000° (etwa 3 Umdrehungen) nicht überschritten hat.

## Claims

1. A method for controlling an electric power tool (10) comprising an electronically commutated electric motor (20), the method comprising the following steps:
(a) generating a pulse width modulated signal the duty factor of which can be varied with respect to the speed control;
(b) starting the electric motor (20) for a first pulse duration using a reduced duty factor of less than 100 %, preferably using a minimum duty factor;
(c) increasing the duty factor for the subsequent pulse duration, if the electric motor (20) has not rotated for a particular time span;
(d) wherein in case the electric motor (20) has rotated for a particular time span, the duty factor is adapted according to the setting of the operating switch (30) for setting the revolution speed according to the presetting of the operating switch (30).

2. The method of claim 1, wherein the particular time span according to step (c) is 10 to 100 milliseconds.

3. The method of claim 1 or 2, wherein in case the electric motor (20) during an operation with increased duty factor has not moved, is operated with a further increased duty factor for a subsequent pulse duration.

4. The method of claim 3, wherein the electric motor (20) has a forward direction and an opposite direction and wherein the electric motor (20), if during an operation with increased duty factor has not moved, initially is driven for a particular pulse duration in opposite direction with a particular angle, and for a subsequent pulse duration is driven in forward direction.

5. The method of any of the preceding claims, wherein a particular waiting time is inserted before operating the electric motor (20) with modified duty factor and/or with modified rotation direction, the waiting time preferably being 10 to 60 milliseconds, particularly preferred about 30 milliseconds.

6. The method of any of the preceding claims, wherein the electric motor (20) is switched off, if during an operation with a duty factor of 100 % it has not moved for a predetermined pulse duration.

7. The method of any of the preceding claims, wherein the duty factor is only increased, if the electric motor (20) since the start-up has not exceeded a particular angle of rotation, preferably about 700° to 1300°, particularly preferred about 1000° (roughly three rotations).

8. An electric power tool comprising an electric motor, control electronics (26) having an operating switch (30) for activating the electric motor (20) and for controlling rotational speed, **characterized in that** the electric motor (20) is electronically commutated, that the control electronics (26) are configured so that the electric motor (20) is driven by means of a pulse width modulated signal the duty factor of which can be varied for controlling rotational speed, wherein during start-up for a first pulse duration it is begun with a reduced duty factor of less than 100 %, preferably with a minimum duty factor, that the duty factor for a subsequent pulse duration independently from the setting of the operating switch (30) is increased, if the electric motor (20) for a particular time span has not rotated, and **in that** the duty factor is thereafter increased according to the setting of the operating switch (30) for adjusting the rotational speed according to the presetting of the operating switch (30).

9. The electric power tool of claim 8, **characterized in that** the control electronics (26) are configured so that the electric motor (20), if it has not moved during an operation with increased duty factor, is operated with a further increased duty factor for a subsequent pulse duration.

10. The electric power tool of claim 9, **characterized in that** the electric motor (20) has a forward direction and an opposite direction, and **in that** the control electronics (26) are configured so that the electric motor (20), if it has not moved during an operation with increased duty factor, initially is driven in opposite direction for a particular pulse duration by a particular angle, and for a subsequent pulse duration is driven in forward direction.

11. The electric power tool of claim 8, 9 or 10, **characterized in that** the control electronics (26) are configured so that a particular waiting time which preferably is 10 to 60 milliseconds, particularly preferred about 30 milliseconds, is inserted before operating the electric motor (20) with a modified duty factor and/or a modified direction of rotation.

12. The electric power tool of any of claims 8 to 11, **characterized in that** the control electronics (26) are configured so that the electric motor (20) is switched off if it has not moved during an operation with a duty factor for a particular pulse duration.

13. The electric power tool of any of claims 8 to 12, **characterized in that** the control electronics (26) are configured so that, if the electric motor (20) has not moved for a particular time span, the duty factor is adjusted according to the setting of the operating switch (30) for adjusting the rotational speed according to the setting of the operating switch (30).

14. The electric power tool of any of claims 8 to 13, **characterized in that** the control electronics (26) are configured so that the duty factor is increased only, if the electric motor (20) since start-up has not exceeded a particular angle of rotation, particularly about 700° to 1300°, particularly preferred about 1000° (roughly three rotations).

## Revendications

1. Procédé pour commander un outil électrique (10) comportant un moteur électrique commuté électroniquement (20), comportant les étapes suivantes :
(a) générer un signal modulé en largeur d'impulsion, dont le rapport cyclique peut être amené à varier pour commander la vitesse de rotation ;
(b) démarrer le moteur électrique (20) pendant une première durée d'impulsion avec un rapport cyclique réduit à moins de 100 %, de préférence avec un rapport cyclique minimal ;
(c) augmenter le rapport cyclique au cours d'une durée d'impulsion suivante, tant que le moteur électrique (20) n'a pas été mis en rotation pendant un intervalle de temps déterminé ;
(d) dans lequel le rapport cyclique n'est adapté conformément à la position d'un commutateur de commande (30) que lorsque le moteur électrique (20) a été mis en rotation pendant une période de temps déterminée, afin de régler la vitesse de rotation conformément à la consigne du commutateur de commande (30).

2. Procédé selon la revendication 1, dans lequel l'intervalle de temps déterminé conformément à l'étape (c) est de 10 à 100 millisecondes.

3. Procédé selon la revendication 1 ou 2, dans lequel le moteur électrique (20) n'est mis en fonctionnement au cours d'une durée d'impulsion suivante avec un rapport cyclique encore augmenté, que lorsqu'il ne s'est pas déplacé pendant un fonctionnement avec un rapport cyclique augmenté.

4. Procédé selon la revendication 3, dans lequel le moteur électrique (20) présente une direction avant et une direction opposée, et dans lequel le moteur électrique (20) n'est tout d'abord entraîné d'un angle déterminé dans la direction opposée au cours d'une durée d'impulsion déterminée et n'est mis en fonctionnement vers l'avant au cours d'une durée d'impulsion suivante, que lorsqu'il ne s'est pas déplacé pendant un fonctionnement avec un rapport cyclique augmenté.

5. Procédé selon l'une quelconque des revendications précédentes, dans lequel un temps d'attente déterminé, qui est de préférence de 10 à 60 millisecondes, et plus préférablement d'environ 30 millisecondes, est inséré avant la mise en fonctionnement du moteur électrique (20) avec un rapport cyclique modifié et/ou une direction de rotation modifiée.

6. Procédé selon l'une quelconque des revendications précédentes, dans lequel le moteur électrique (20) est désactivé lorsqu'il ne s'est pas déplacé pendant un fonctionnement avec un rapport cyclique de 100 % au cours d'une durée d'impulsion prédéterminée.

7. Procédé selon l'une quelconque des revendications précédentes, dans lequel le rapport cyclique n'est augmenté que lorsque le moteur électrique (20), depuis le démarrage, n'a pas dépassé un angle de rotation déterminé, de préférence d'environ 700° à 1300°, et plus préférablement d'environ 1000° (environ 3 tours).

8. Outil électrique comportant un moteur électrique et comportant une électronique de commande (26) munie d'un commutateur de commande (30) pour activer le moteur électrique (20) et pour commander la vitesse de rotation, **caractérisé en ce que** le moteur électrique (20) est commuté électroniquement, **en ce que** l'électronique de commande (26) est réalisée de manière à ce que le moteur électrique (20) soit commandé au moyen d'un signal modulé en largeur d'impulsion, dont le rapport cyclique peut être amené à varier pour commander la vitesse de rotation, dans lequel, lors du démarrage, pendant une première durée d'impulsion, on commence par un rapport cyclique réduit à moins de 100 %, de préférence par un rapport cyclique minimal, **en ce que** le rapport cyclique est augmenté au cours d'une durée d'impulsion suivante indépendamment de la position du commutateur de commande (30), tant que le moteur électrique (20) n'a pas été mis en rotation pendant une période de temps déterminée, et **en ce que** le rapport cyclique n'est adapté, conformément à la position du commutateur de commande (30), que lorsque le moteur électrique (20) a été mis en rotation pendant une période de temps déterminée, afin de régler la vitesse de rotation conformément à la consigne du commutateur de commande (30).

9. Outil électrique selon la revendication 8, **caractérisé en ce que** l'électronique de commande (26) est réalisée de manière à ce que le moteur électrique (20) ne soit mis en fonctionnement au cours d'une durée d'impulsion suivante pendant un fonctionnement avec un rapport cyclique encore augmenté, que lorsqu'il ne s'est pas déplacé avec un rapport cyclique augmenté.

10. Outil électrique selon la revendication 9, **caractérisé en ce que** le moteur électrique (20) présente une direction avant et une direction opposée, et **en ce que** l'électronique de commande (26) est réalisée de manière à ce que le moteur électrique (20) ne soit entraîné en premier lieu au cours d'une durée d'impulsion déterminée d'un angle déterminé dans la direction opposée et ne soit mis en fonctionnement dans la direction avant au cours d'une durée d'impulsion suivante, que lorsqu'il ne s'est pas déplacé pendant un fonctionnement avec un rapport cyclique augmenté.

11. Outil électrique selon la revendication 8, 9 ou 10, **caractérisé en ce que** l'électronique de commande (26) est réalisée de manière à ce qu'un temps d'attente déterminé, qui est de préférence de 10 à 60 millisecondes, et plus préférablement d'environ 30 millisecondes, soit inséré avant la mise en fonctionnement du moteur électrique (20) avec un rapport cyclique modifié et/ou dans une direction de rotation modifiée.

12. Outil électrique selon l'un quelconque des revendications 8 à 11, **caractérisé en ce que** l'électronique de commande (26) est réalisée de manière à ce que le moteur électrique (20) soit désactivé lorsqu'il ne s'est pas déplacé pendant un fonctionnement avec un rapport cyclique de 100 % au cours d'une durée d'impulsion prédéterminée.

13. Outil électrique selon l'un quelconque des revendications 8 à 12, **caractérisé en ce que** l'électronique de commande (26) est réalisée de manière à ce que le rapport cyclique ne soit adapté conformément à la position du commutateur de commande (30), que lorsque le moteur électrique (20) s'est déplacé pendant une période de temps déterminée, afin d'adapter la vitesse de rotation conformément à la position du commutateur de commande (30).

14. Outil électrique selon l'un quelconque des revendications 8 à 13, **caractérisé en ce que** l'électronique de commande (26) est réalisée de manière à ce que le rapport cyclique ne soit augmenté que lorsque le moteur électrique (20), depuis le démarrage, n'a pas dépassé un angle de rotation déterminé, de préférence d'environ 700° à 1300°, et plus préférablement d'environ 1000° (environ 3 tours).
